# EUROPEAN PATENT APPLICATION

(11) **EP 4 794 413 A1**
(43) Date of publication of application: **19.08.2026**
(21) Application number: 24881462.6
(22) Date of filing: 14.10.2024
(51) Int. Cl.: H04W 72/044

(54) **COMMUNICATION METHOD AND COMMUNICATION APPARATUS**

(30) Priority: 25.10.2023 CN 202311391407
(71) Applicant: HUAWEI TECHNOLOGIES CO., LTD., Shenzhen 518129 (CN)
(72) Inventor: LU, Jianzhong, Shenzhen, Guangdong 518129 (CN); XIE, Xinqian, Shenzhen, Guangdong 518129 (CN); SHAO, Jiafeng, Shenzhen, Guangdong 518129 (CN)
(74) Representative: Körber, Martin Hans
(86) International application number: PCT/CN2024/124719
(87) International publication number: WO 2025/087096

(57) **Abstract**

This application provides a communication method and a communication apparatus. In this method, an access network device may indicate N first resources to a terminal device and send a sensing signal to the terminal device based on the N first resources. This allows the terminal device to receive the sensing signal based on sensing resources (the N first resources) indicated by the access network device. When sensing requirements change, a sensing resource used by the access network device may also change. For example, when switching from detection mode to tracking mode, the access network device can dynamically indicate a sensing resource in the tracking mode to the terminal device. This enables the terminal device to select an appropriate sensing resource for reception in a current sensing service, offering flexible indication while reducing indication overhead.

## Description

This application claims priority to Chinese Patent Application No. 202311391407.7, filed with the China National Intellectual Property Administration on October 25, 2023 and entitled "COMMUNICATION METHOD AND COMMUNICATION APPARATUS", which is incorporated herein by reference in its entirety.

### TECHNICAL FIELD

This application relates to the field of communication technologies, and more specifically, to a communication method and a communication apparatus.

### BACKGROUND

During the evolution from a 5th generation (5th Generation, 5G) mobile communication system to 5G-advanced (5G-Advanced, 5G-A) technology, integrated sensing and communication is considered as one of key technologies capable of extending capabilities of a mobile communication network. This technology aims to integrate wireless communication and sensing functions into a single system, leveraging various propagation characteristics of wireless signals to construct capabilities to detect, track, and image targets. This allows communication and sensing to be integrated within a single network, achieving harmonious coexistence and even mutual benefit.

In a sensing scenario, an access network device sends a sensing signal based on a configured sensing resource. However, sensing service requirements may change. For example, sensing applications generally operate in one of two modes based on service requirements: detection mode and tracking mode. In detection mode, all-round sensing is performed across an entire sensing range, whereas in tracking mode, specific targets in some specific areas are detected.

Therefore, there is a pressing need for a communication method that can adapt to changes in sensing service requirements, thereby improving sensing performance.

### SUMMARY

This application provides a communication method and a communication apparatus to adapt to changes in sensing service requirements, thereby improving sensing capabilities of a system.

According to a first aspect, a communication method is provided. The method may be performed by an access network device, or may be performed by a chip or a circuit configured in the access network device, or may be performed by a logical module or software that can implement all or some functions of the access network device. This is not limited in this application.

The method includes: sending first indication information, where the first indication information indicates N first resources, and the N first resources belong to M first resources; and sending a sensing signal, where the sensing signal is carried on the N first resources, N and M are positive integers, and N is less than or equal to M.

In this application, the M first resources may be used to implement positioning and other functions, and may also be used for sensing.

In this application, the M first resources may be sensing resources corresponding to a first sensing service requirement, and the N first resources may be sensing resources corresponding to a second sensing service requirement.

For example, the first sensing service requirement may correspond to detection mode, and the second sensing service requirement may correspond to tracking mode.

In a sensing scenario, a service requirement of a sensing service may change, and a sensing resource used by the access network device may also change accordingly. In this technical solution, the access network device may indicate the N first resources to the terminal device, and send the sensing signal to the terminal device based on the N first resources. This allows the terminal device to receive the sensing signal based on sensing resources (the N first resources) indicated by the access network device. After the sensing requirement used by the access network device changes, for example, after switching from detection mode to tracking mode, the access network device can dynamically indicate a sensing resource in the tracking mode to the terminal device. This enables the terminal device to select an appropriate beam for reception in a current sensing service. Therefore, sensing performance is improved.

With reference to the first aspect, in some implementations of the first aspect, the N first resources are any N first resources among the M first resources; the N first resources are N first resources with indexes 0 to N-1 among the M first resources; the N first resources are N first resources with indexes M-N to M-1 among the M first resources; the N first resources are N first resources with indexes 0 to m-1 and M-(N-m) to M-1 among the M first resources, where m is a positive integer, m is greater than 0, and m is less than N; the N first resources are N first resources with consecutive indexes among the M first resources; or the N first resources include first resources in L first resource groups, the first resources in the L first resource groups belong to the M first resources, and indexes of first resources in each of the L first resource groups are consecutive.

In this technical solution, the N first resources may be consecutive resources or non-consecutive resources among the M first resources. When indexes of resources are consecutive, indication overheads are low, which facilitates reservation of consecutive resources and eases implementation. When indexes of resources are non-consecutive, an indication manner is more flexible, and is applicable to more scenarios.

It should be understood that N consecutive sensing resources are indicated, and indexes of resources are determined based on a sequence of time domain resource positions of a specific resource indication. In addition, indexes of beams are consecutively numbered in ascending order of sweeping angles or in descending order of sweeping angles. If the indexes of the resources and the indexes of the beams are arranged in disorder, indication may be performed by using a bitmap.

With reference to the first aspect, in some implementations of the first aspect, the first indication information indicates indexes of the N first resources.

With reference to the first aspect, in some implementations of the first aspect, the first indication information includes indexes of the N first resources; the first indication information includes a value of N; the first indication information includes at least two of: a value of N, a value of m, or a value of N-m; the first indication information includes at least two of: a minimum index of a first resource among the N first resources, a maximum index of a first resource among the N first resources, or a value of N; or the first indication information includes a value of L and at least two of: a minimum index of a first resource in each first resource group, a maximum index of a first resource in each first resource group, or a value of a quantity of first resources in the first resource group.

In this technical solution, the first indication information may indicate the N first resources in different manners. The indication manner is flexible and is applicable to a plurality of scenarios.

With reference to the first aspect, in some implementations of the first aspect, the method further includes: sending second indication information, where the second indication information indicates the M first resources.

With reference to the first aspect, in some implementations of the first aspect, the method further includes: sending third indication information, where the third indication information indicates an index of a reference signal associated with at least one of the N first resources.

In this technical solution, an association relationship between at least one of the N first resources and a beam may change, and the access network device dynamically indicates a changed association relationship to a UE by using an index of a reference signal. This enables the UE to select an appropriate beam for reception when a sensing requirement changes, thereby improving sensing performance and further implementing flexible indication and low indication overhead.

With reference to the first aspect, in some implementations of the first aspect, the first indication information is carried in a medium access control control element or downlink control information.

With reference to the first aspect, in some implementations of the first aspect, the sensing signal is at least one of: a positioning reference signal, a phase tracking reference signal, a sounding reference signal, a demodulation reference signal, or a channel state information reference signal.

In this technical solution, an existing reference signal may be reused as the sensing signal, a protocol change is small, implementation complexity is low, and implementability is stronger.

According to a second aspect, a communication method is provided. The method may be performed by a terminal device, or may be performed by a chip or a circuit configured in the terminal device, or may be performed by a logical module or software that can implement all or some functions of the terminal device. This is not limited in this application.

The method includes: receiving second indication information, where the second indication information indicates M first resources; receiving first indication information, where the first indication information indicates N first resources, and the N first resources belong to the M first resources; and receiving a first signal based on the N first resources, where the first signal is a sensing signal sent by a network device, N and M are positive integers, and N is less than or equal to M.

In this application, the M first resources may be used to implement positioning and other functions, and may also be used for sensing.

In this application, the M first resources may be sensing resources corresponding to a first sensing service requirement, and the N first resources may be sensing resources corresponding to a second sensing service requirement.

For example, the first sensing service requirement may correspond to detection mode, and the second sensing service requirement may correspond to tracking mode.

In a sensing scenario, a service requirement of a sensing service may change, and a sensing resource used by an access network device also needs to change. In this technical solution, the terminal device may receive the M first resources and the N first resources that are sent by the access network device, and receive, based on the N first resources, the sensing signal sent by the access network device. After the sensing resource used by the access network device changes, for example, when switching from detection mode to tracking mode, the access network device can dynamically indicate a sensing resource in the tracking mode to the terminal device. This enables the terminal device to select an appropriate sensing resource for reception in a current sensing service, offering flexible indication while reducing indication overhead.

With reference to the second aspect, in some implementations of the second aspect, the N first resources are any N first resources among the M first resources; the N first resources are N first resources with indexes 0 to N-1 among the M first resources; the N first resources are N first resources with indexes M-N to M-1 among the M first resources; the N first resources are N first resources with indexes 0 to m-1 and M-(N-m) to M-1 among the M first resources, where m is a positive integer, m is greater than 0, and m is less than N; the N first resources are N first resources with consecutive indexes among the M first resources; or the N first resources include first resources in L first resource groups, the first resources in the L first resource groups belong to the M first resources, and indexes of first resources in each of the L first resource groups are consecutive.

In this technical solution, the N first resources may be consecutive resources or non-consecutive resources among the M first resources. When indexes of resources are consecutive, indication overheads are low, which facilitates reservation of consecutive resources and eases implementation. When indexes of resources are non-consecutive, an indication manner is more flexible, and is applicable to more scenarios.

With reference to the second aspect, in some implementations of the second aspect, the first indication information indicates indexes of the N first resources.

With reference to the second aspect, in some implementations of the second aspect, the first indication information includes indexes of the N first resources; the first indication information includes a value of N; the first indication information includes at least two of: a value of N, a value of m, or a value of N-m; the first indication information includes at least two of: a minimum index of a first resource among the N first resources, a maximum index of a first resource among the N first resources, or a value of N; or the first indication information includes a value of L and at least two of: a minimum index of a first resource in each first resource group, a maximum index of a first resource in each first resource group, or a value of a quantity of first resources in the first resource group.

In this technical solution, the terminal device may determine the N first resources based on different indication manners of the first indication information. The indication manner is flexible, and is applicable to a plurality of scenarios.

With reference to the second aspect, in some implementations of the second aspect, third indication information is received; and an index of a reference signal associated with at least one of the N first resources is determined based on the third indication information.

In this technical solution, an association relationship between a sensing-related resource and a beam changes, and the terminal device determines, based on an index that is indicated by the access network device and that is of a reference signal associated with the sensing resource, a beam associated with the sensing resource . This enables a UE to select an appropriate sensing resource in a tracking state for reception, implementing flexible indication and low indication overhead.

With reference to the second aspect, in some implementations of the second aspect, the first indication information is carried in a medium access control control element or downlink control information.

With reference to the second aspect, in some implementations of the second aspect, the first signal is at least one of: a positioning reference signal, a phase tracking reference signal, a sounding reference signal, a demodulation reference signal, or a channel state information reference signal.

In this technical solution, an existing reference signal may be reused as the sensing signal, a protocol change is small, and implementability is stronger.

According to a third aspect, a communication apparatus is provided. The apparatus may be an access network device, or may be an apparatus (for example, a chip or a circuit) configured in the access network device, or may be a logical module or software that can implement all or some functions of the access network device. This is not limited in this application.

The apparatus includes: a transceiver unit, configured to send first indication information, where the first indication information indicates N first resources, and the N first resources belong to M first resources. The transceiver unit is further configured to send a sensing signal, where the sensing signal is carried on the N first resources, N and M are positive integers, and N is less than or equal to M.

With reference to the third aspect, in some implementations of the third aspect, the N first resources are any N first resources among the M first resources; the N first resources are N first resources with indexes 0 to N-1 among the M first resources; the N first resources are N first resources with indexes M-N to M-1 among the M first resources; the N first resources are N first resources with indexes 0 to m-1 and M-(N-m) to M-1 among the M first resources, where m is a positive integer, m is greater than 0, and m is less than N; the N first resources are N first resources with consecutive indexes among the M first resources; or the N first resources include first resources in L first resource groups, the first resources in the L first resource groups belong to the M first resources, and indexes of first resources in each of the L first resource groups are consecutive.

With reference to the third aspect, in some implementations of the third aspect, the first indication information indicates indexes of the N first resources.

With reference to the third aspect, in some implementations of the third aspect, the first indication information includes indexes of the N first resources; the first indication information includes a value of N; the first indication information includes at least two of: a value of N, a value of m, or a value of N-m; the first indication information includes at least two of: a minimum index of a first resource among the N first resources, a maximum index of a first resource among the N first resources, or a value of N; or the first indication information includes a value of L and at least two of: a minimum index of a first resource in each first resource group, a maximum index of a first resource in each first resource group, or a value of a quantity of first resources in the first resource group.

With reference to the third aspect, in some implementations of the third aspect, the transceiver unit is further configured to send second indication information, where the second indication information indicates the M first resources.

With reference to the third aspect, in some implementations of the third aspect, the transceiver unit is further configured to send third indication information, where the third indication information indicates an index of a reference signal associated with at least one of the N first resources.

With reference to the third aspect, in some implementations of the third aspect, the first indication information is carried in a medium access control control element or downlink control information.

With reference to the third aspect, in some implementations of the third aspect, the sensing signal is at least one of: a positioning reference signal, a phase tracking reference signal, a sounding reference signal, a demodulation reference signal, or a channel state information reference signal.

It should be understood that specific processes and possible implementations of performing the corresponding steps by the transceiver unit and the processing unit of the apparatus are described in detail in the first aspect. For beneficial effects of this aspect, refer to the first aspect. For brevity, details are not described herein again.

According to a fourth aspect, a communication apparatus is provided. The apparatus may be a terminal device, or may be an apparatus (for example, a chip or a circuit) configured in the terminal device, or may be a logical module or software that can implement all or some functions of the terminal device. This is not limited in this application.

The apparatus includes: a transceiver unit, configured to receive second indication information, where the second indication information indicates M first resources, where the transceiver unit is further configured to receive first indication information, where the first indication information indicates N first resources, and the N first resources belong to the M first resources; and a processing unit, configured to receive a first signal based on the N first resources, where the first signal is a sensing signal sent by a network device, N and M are positive integers, and N is less than or equal to M.

With reference to the fourth aspect, in some implementations of the fourth aspect, the N first resources are any N first resources among the M first resources; the N first resources are N first resources with indexes 0 to N-1 among the M first resources; the N first resources are N first resources with indexes M-N to M-1 among the M first resources; the N first resources are N first resources with indexes 0 to m-1 and M-(N-m) to M-1 among the M first resources, where m is a positive integer, m is greater than 0, and m is less than N; the N first resources are N first resources with consecutive indexes among the M first resources; or the N first resources include first resources in L first resource groups, the first resources in the L first resource groups belong to the M first resources, and indexes of first resources in each of the L first resource groups are consecutive.

With reference to the fourth aspect, in some implementations of the fourth aspect, the first indication information indicates indexes of the N first resources.

With reference to the fourth aspect, in some implementations of the fourth aspect, the first indication information includes indexes of the N first resources; the first indication information includes a value of N; the first indication information includes at least two of: a value of N, a value of m, or a value of N-m; the first indication information includes at least two of: a minimum index of a first resource among the N first resources, a maximum index of a first resource among the N first resources, or a value of N; or the first indication information includes a value of L and at least two of: a minimum index of a first resource in each first resource group, a maximum index of a first resource in each first resource group, or a value of a quantity of first resources in the first resource group.

With reference to the fourth aspect, in some implementations of the fourth aspect, the transceiver unit is further configured to receive third indication information; and the processing unit is further configured to determine, based on the third indication information, an index of a reference signal associated with at least one of the N first resources.

With reference to the fourth aspect, in some implementations of the fourth aspect, the first indication information is carried in a medium access control control element or downlink control information.

With reference to the fourth aspect, in some implementations of the fourth aspect, the first signal is at least one of: a positioning reference signal, a phase tracking reference signal, a sounding reference signal, a demodulation reference signal, or a channel state information reference signal.

It should be understood that specific processes and possible implementations of performing the corresponding steps by the transceiver unit and the processing unit of the apparatus are described in detail in the second aspect. For beneficial effects of this aspect, refer to the second aspect. For brevity, details are not described herein again.

According to a fifth aspect, this application provides a communication apparatus, including a processor, configured to perform the methods provided in the foregoing aspects.

Operations such as sending and obtaining/receiving related to the processor may be understood as operations such as output and receiving or input of the processor, or operations such as sending and receiving performed by a radio frequency circuit and an antenna, unless otherwise specified, or provided that the operations do not contradict actual functions or internal logic of the operations in related descriptions. This is not limited in this application.

Optionally, the communication apparatus further includes: a memory, configured to store a program. The processor is configured to execute the computer program or instructions stored in the memory, to perform the method provided in any one of the foregoing aspects or the implementations of the foregoing aspects.

According to a sixth aspect, this application provides a communication system. The system includes a terminal device and an access network device. The access network device is configured to send second indication information, where the second indication information indicates M first resources. The access network device is further configured to send first indication information, where the first indication information indicates N first resources, and the N first resources belong to the M first resources. The access network device is further configured to send a sensing signal, where the sensing signal is carried on the N first resources, N and M are positive integers, and N is less than or equal to M. The terminal device is configured to receive the second indication information and determine the M first resources based on the second indication information. The terminal device is further configured to receive the first indication information and determine the N first resources based on the first indication information, where the N first resources belong to the M first resources. The terminal device is further configured to receive a first signal based on the N first resources, where the first signal is the sensing signal sent by the network device.

According to a seventh aspect, this application provides a communication system. The system includes the communication apparatus in the third aspect and the communication apparatus in the fourth aspect.

According to an eighth aspect, this application provides a computer-readable storage medium. The computer-readable medium stores a computer program or instructions, and when the computer program or the instructions are run on a computer, the method provided in any one of the foregoing aspects or the implementations of the foregoing aspects is performed.

According to a ninth aspect, this application provides a computer program product including instructions. When the computer program product runs on a computer, the method provided in any one of the foregoing aspects or the implementations of the foregoing aspects is performed.

According to a tenth aspect, this application provides a chip. The chip includes a processor and a communication interface. The processor reads, through the communication interface, instructions stored in a memory, to perform the method provided in any one of the foregoing aspects or the implementations of the foregoing aspects.

Optionally, in an implementation, the chip further includes the memory. The memory stores a computer program or the instructions. The processor is configured to execute the computer program or the instructions stored in the memory. When the computer program or the instructions are executed, the processor is configured to perform the method provided in any one of the foregoing aspects or the implementations of the foregoing aspects.

The chip may include an input circuit or interface for sending information or data, and an output circuit or interface for receiving information or data.

### BRIEF DESCRIPTION OF DRAWINGS

FIG. 1 is a diagram of a communication system 100 applicable to an embodiment of this application;
FIG. 2A to FIG. 2F are diagrams of a sensing scenario applicable to an embodiment of this application;
FIG. 3 is a diagram of detection mode and tracking mode applicable to an embodiment of this application;
FIG. 4 is a schematic flowchart of a communication method 400 applicable to an embodiment of this application;
FIG. 5 is a diagram of a resource indication manner applicable to an embodiment of this application;
FIG. 6 is a diagram of a resource indication manner applicable to an embodiment of this application;
FIG. 7 is a diagram of a resource indication manner applicable to an embodiment of this application;
FIG. 8 is a diagram of a resource indication manner applicable to an embodiment of this application;
FIG. 9 is a diagram of a resource indication manner applicable to an embodiment of this application;
FIG. 10 is a diagram of a resource indication manner applicable to an embodiment of this application;
FIG. 11 is a diagram of a resource indication manner applicable to an embodiment of this application;
FIG. 12 is a block diagram of a structure of a communication apparatus applicable to an embodiment of this application; and
FIG. 13 is a block diagram of a structure of a communication apparatus applicable to an embodiment of this application.

### DESCRIPTION OF EMBODIMENTS

The following describes technical solutions of this application with reference to the accompanying drawings.

The technical solutions provided in this application may be applied to various communication systems, for example, a fifth generation (5th generation, 5G) or new radio (new radio, NR) system, a long term evolution (long term evolution, LTE) system, an LTE frequency division duplex (frequency division duplex, FDD) system, and an LTE time division duplex (time division duplex, TDD) system. The technical solutions provided in this application may be further applied to a future communication system, for example, a 6th generation mobile communication system. The technical solutions provided in this application may be further applied to device to device (device to device, D2D) communication, vehicle-to-everything (vehicle-to-everything, V2X) communication, machine to machine (machine to machine, M2M) communication, machine type communication (machine type communication, MTC), an internet of things (internet of things, IoT) communication system, or another communication system.

A terminal device in embodiments of this application includes various devices having a wireless communication function, and the terminal device may be configured to be connected to a person, an object, a machine, and the like. The terminal device may be widely used in various scenarios, such as cellular communication, D2D, V2X, peer to peer (peer-to-peer, P2P), M2M, MTC, IoT, virtual reality (virtual reality, VR), augmented reality (augmented reality, AR), industrial control, self-driving, telemedicine, smart grid, smart furniture, smart office, smart wearable, smart transportation, smart city, uncrewed aerial vehicle, robot, remote sensing, passive sensing, positioning, navigation and tracking, and autonomous delivery. The terminal device may be a terminal in any one of the foregoing scenarios, such as an MTC terminal or an IoT terminal. The terminal device may be a user equipment (user equipment, UE) in a 3rd generation partnership project (3rd generation partnership project, 3GPP) standard, a terminal (terminal), a fixed device, a mobile station (mobile station) device or a mobile device, a subscriber unit (subscriber unit), a handheld device, a vehicle-mounted device, a wearable device, a cellular phone (cellular phone), a smartphone (smartphone), a SIP phone, a wireless data card, a personal digital assistant (personal digital assistant, PDA), a computer, a tablet computer, a notebook computer, a wireless modem, a handset (handset), a laptop computer (laptop computer), a computer having a wireless transceiver function, a smart book, a vehicle, a satellite, a global positioning system (global positioning system, GPS) device, a target tracking device, an aircraft (for example, an uncrewed aerial vehicle, a helicopter, a multi-helicopter, a quadcopter, or an airplane), a ship, a remote control device, a smart home device, an industrial device, an apparatus built in the foregoing device (for example, a communication module, a modem, or a chip in the foregoing device), or another processing device connected to a wireless modem. For ease of description, an example in which the terminal device is a terminal or a UE is used below for description.

It should be understood that, in some scenarios, the UE may be further configured to serve as a base station. For example, the UE may serve as a scheduling entity that provides a sidelink signal between UEs in a scenario such as V2X, D2D, or P2P.

In embodiments of this application, an apparatus configured to implement a function of the terminal device may be the terminal device, or may be an apparatus that can support the terminal device in implementing the function, for example, a chip system or a chip. The apparatus may be installed in the terminal device. In embodiments of this application, the chip system may include a chip, or may include a chip and another discrete component.

A network device in embodiments of this application may be a device configured to communicate with the terminal device. The network device may also be referred to as an access network device or a radio access network device. For example, the network device may be a base station. The network device in embodiments of this application may be a radio access network (radio access network, RAN) node (or device) that connects the terminal device to a wireless network. The base station may cover the following names in a broad sense, or may be replaced with the following names, for example, a NodeB (NodeB), an evolved NodeB (evolved NodeB, eNB), a next generation NodeB (next generation NodeB, gNB), a relay station, an access point, a transmission point (transmitting and receiving point, TRP), a transmission point (transmitting point, TP), a primary station, a secondary station, a multi-standard radio (motor slide retainer, MSR) node, a home base station, a network controller, an access node, a radio node, an access point (AP), a transmission node, a transceiver node, and a positioning node. The base station may be a macro base station, a micro base station, a relay node, a donor node, an analogue, or a combination thereof. The base station may alternatively be a communication module, a modem, or a chip that is disposed in the foregoing device or apparatus. The base station may alternatively be a mobile switching center, a device that functions as a base station in D2D, V2X, and M2M communication, a network side device in a 6G network, a device that functions as a base station in a future communication system, or the like. The base station may support networks using a same access technology or different access technologies. A specific technology and a specific device form that are used by the network device are not limited in embodiments of this application.

In some scenarios, the network device may alternatively be a module or a unit that can implement some or all functions of the base station. For example, the network device may be a central unit (central unit, CU), a distributed unit (distributed unit, DU), a CU and a DU, a CU-control plane (control plane, CP), a CU-user plane (user plane, UP), or a radio unit (radio unit, RU). The CU and the DU may be separately disposed, or may be included in a same network element, for example, a baseband unit (baseband unit, BBU). The RU may be included in a radio frequency device or a radio frequency unit, for example, included in a remote radio unit (remote radio unit, RRU), an active antenna unit (active antenna unit, AAU), or a remote radio head (remote radio head, RRH).

In different systems, the CU (or the CU-CP and the CU-UP), the DU, or the RU may also have different names, but a person skilled in the art may understand meanings thereof. For example, the network device may be a network device in an open radio access network (open RAN, ORAN) system or a module of the network device. In an ORAN system, the CU may also be referred to as an open (open, O)-CU, the DU may also be referred to as an O-DU, the CU-CP may also be referred to as an O-CU-CP, the CU-UP may also be referred to as an O-CU-UP, and the RU may also be referred to as an O-RU. Any one of the CU (or the CU-CP or the CU-UP), the DU, and the RU in this application may be implemented by using a software module, a hardware module, or a combination of a software module and a hardware module.

The base station may be fixed or mobile. For example, a helicopter or an uncrewed aerial vehicle may be configured as a mobile base station, and one or more cells may move based on a position of the mobile base station. In other examples, a helicopter or an uncrewed aerial vehicle may be configured as a device for communicating with another base station.

In embodiments of this application, an apparatus configured to implement a function of the network device may be a terminal device, or may be an apparatus that can support the network device in implementing the function, for example, a chip system or a chip. The apparatus may be installed in the network device. In embodiments of this application, the chip system may include a chip, or may include a chip and another discrete component.

The network device and the terminal device may be deployed on land, including an indoor or outdoor device, a hand-held device, or a vehicle-mounted device; may be deployed on water; or may be deployed on an airplane, a balloon, and a satellite in the air. Scenarios in which the network device and the terminal device are located are not limited in embodiments of this application.

First, a network architecture applicable to embodiments of this application is briefly described as follows.

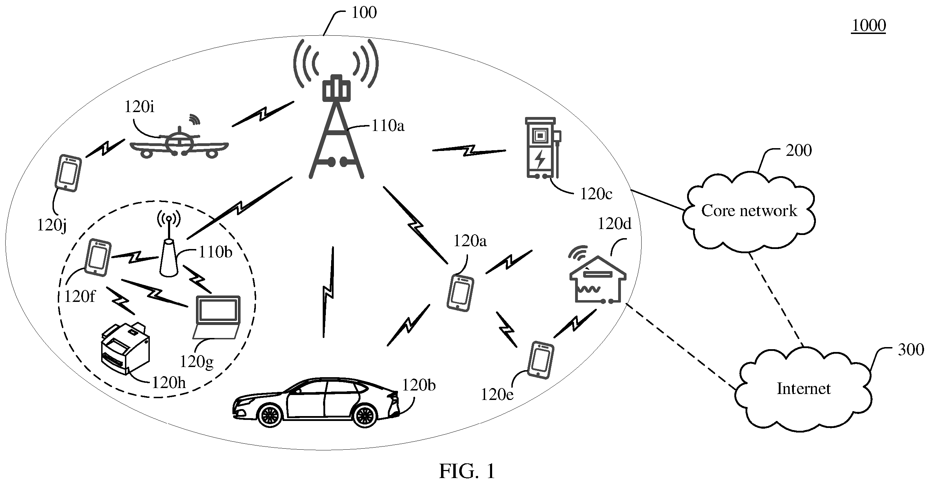

FIG. 1 is a diagram of a communication system 100 applicable to an embodiment of this application. As shown in FIG. 1, the wireless communication system 100 may include at least one network device, for example, a network device 110 shown in FIG. 1. The wireless communication system 100 may further include at least one terminal device, for example, a terminal device 120 and a terminal device 130 shown in FIG. 1. A plurality of antennas may be configured for both the network device and the terminal device, and the network device and the terminal device may communicate with each other by using a multi-antenna technology. The terminal devices may also communicate with each other. For example, the terminal devices may directly communicate with each other. For another example, the terminal devices may communicate with each other via another communication device, for example, a network device or another terminal device.

When the network device communicates with the terminal device, the network device may manage one or more cells, and one cell may have an integer quantity of terminal devices. Optionally, the network device 110 and the terminal device 120 form one single-cell communication system. Without loss of generality, the cell is referred to as a cell #1. The network device 110 may be a network device in the cell #1, or the network device 110 may serve a terminal device (for example, the terminal device 120) in the cell #1.

It should be noted that, the cell may be understood as an area within coverage of a radio signal of the network device.

It should be understood that FIG. 1 is merely a simplified diagram of an example for ease of understanding. The wireless communication system 100 may further include another network device or may further include another terminal device, which is not shown in FIG. 1. Embodiments of this application are applicable to any communication scenario in which a transmit-side device communicates with a receive-side device.

For ease of understanding embodiments of this application, the following first briefly describes terms in embodiments of this application.
1. Sensing: In the communication field, sensing means obtaining surrounding environment information by using a sensing network, for example, target positioning, target imaging, target detection, and target tracking. The sensing information may be used for optimization and improvement of a communication system, for example, avoiding an obstacle and improving communication quality. Sensing may be further used for channel modeling and signal analysis of the wireless communication system to better understand and optimize communication performance.
2. Self-sensing: In this application, self-sensing means that sensing measurement on a sensed target is implemented by receiving a sensing signal sent by itself. For example, in wireless communication, self-sensing may include sensing of a radio channel, sensing of a transmit power, sensing of signal quality, and the like. For example, a transmit side transmits a sensing signal, and the sensing signal is received by the transmit side after being reflected by a sensed target. The transmit side may obtain a distance of the sensed target based on transmitting time and receiving time of the sensing signal. The self-sensing technology is applied in many fields, such as intelligent transportation, smart city, and smart home. Self-sensing may also be referred to as a monostatic sensing mode. In terms of a sensing signal procedure, a sensing station needs to send a sensing signal, and also needs to receive a signal obtained by reflecting the sensing signal by a target surface. Therefore, the monostatic sensing mode is also referred to as a self-sending and self-receiving mode.
3. Receiving-sending separated sensing: In this application, receiving-sending separated sensing means that two functions: receiving and sending are separately performed. Receiving-sending separated sensing can achieve better signal receiving and sending effects, and can also reduce system complexity and improve system stability. For example, a receiving-sending separated sensing system includes two parts: a transmit side and a receive side. The transmit side is responsible for transmitting a sensing signal, the sensing signal is received by the receive side after being reflected by a sensed target, and the receive side processes the sensing signal to obtain information about the sensed target. The receiving-sending separated sensing technology is applied in many fields, such as wireless communication, satellite communication, and radar. This technology can improve transmission efficiency and reliability of a communication system and can also reduce complexity and costs of the system. Receiving-sending separated sensing may also be referred to as a bistatic sensing mode. In terms of a sensing signal procedure, the transmit side and the receive side of the sensing signal are two different devices. In terms of the sensing signal procedure, after a sensing station A sends a sensing signal, a signal obtained by reflecting the signal by a target surface is received by a sensing station B. Therefore, the bistatic sensing mode is also referred to as an A-sending and B-receiving mode.

It may be understood that, in a monostatic sensing scenario, an access network device may perform self-sending and self-receiving, or a terminal device may perform self-sending and self-receiving. In a bistatic sensing scenario, an access network device A may perform sending and an access network device B may perform receiving; or an access network device may perform sending and a UE may perform receiving; or a UE may perform sending and an access network device may perform receiving; or a UE #1 may perform sending and a UE #2 may perform receiving.

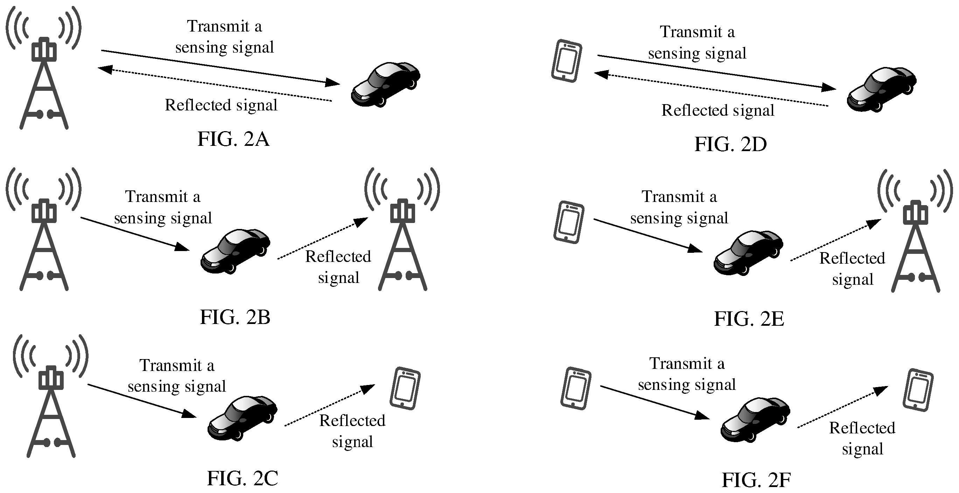

FIG. 2A to FIG. 2F are diagrams of a sensing scenario applicable to an embodiment of this application.

FIG. 2A shows a sensing scenario in which an access network device A performs self-sending and self-receiving. The access network device A transmits a sensing signal, and the access network device A receives a reflected signal generated when the sensing signal encounters a target in an environment, and further senses information such as a position and a speed of the target. FIG. 2B shows a sensing scenario in which an access network device A performs sending and an access network device B performs receiving. The access network device A transmits a sensing signal, and the access network device B receives a reflected signal generated when the sensing signal encounters a target in an environment, so that the access network device B senses information such as a position and a speed of the target. FIG. 2C shows a sensing scenario in which an access network device A performs sending and a terminal device performs receiving. The access network device A transmits a sensing signal, and the terminal device receives a reflected signal generated when the sensing signal encounters a target in an environment, so that the terminal device senses information such as a position and a speed of the target.

FIG. 2D shows a sensing scenario in which the UE performs self-sending and self-receiving. The UE #1 transmits a sensing signal, and the UE #1 receives a reflected signal generated when the sensing signal encounters a target in an environment, and further senses information such as a position and a speed of the target. FIG. 2E shows a sensing scenario in which a UE #1 performs sending and an access network device performs receiving. The UE #1 transmits a sensing signal, and the access network device B receives a reflected signal generated when the sensing signal encounters a target in an environment, so that the access network device B senses information such as a position and a speed of the target. FIG. 2F shows a sensing scenario in which a UE #1 performs sending and a UE #2 performs receiving. The UE #1 transmits a sensing signal, and the UE #2 receives a reflected signal generated when the sensing signal encounters a target in an environment, so that the UE #2 senses information such as a position and a speed of the target.

The foregoing sensing scenarios are merely examples for description, and constitute no limitation on embodiments of this application.

In this application, sensed targets include various tangible objects that can reflect an electromagnetic wave in an environment, for example, a ground object such as a mountain, a forest, or a building, and may further include a movable object such as a vehicle, an uncrewed aerial vehicle, a pedestrian, or a terminal device. The sensed target may also be referred to as an object, a detected target, a sensed object, a detected object, a sensed device, or the like. This is not limited in embodiments of this application.

In a sensing scenario, a service requirement of a sensing service may change. For example, a sensing area changes. In this case, a sensed target in a specific area needs to be sensed. For another example, the sensed target moves. In this case, a target area of the sensed target needs to be sensed. For another example, the sensed target changes. In this case, a specific sensed target needs to be sensed. When the service requirement of the sensing service changes, a sensing resource used by the access network device may also change accordingly. In other words, different sensing resources may be used to perform sensing services with different requirements. Therefore, a change of the sensing requirement may also be reflected as a change of the sensing resource.

In this application, the access network device may determine a used sensing resource based on a sensing requirement. After the sensing requirement changes, the sensing resource used by the access network device may also change based on a current sensing requirement. In other words, for different sensing requirements, the access network device may use different sensing resources. A change of the sensing requirement may be reflected as a change of a sensing area or a change of a sensed target. For example, the sensing requirement is to perform all-round sensing on a target area. In this case, the access network device may use all configured sensing resources. When the sensing requirement changes to perform sensing on a part of the target area, the access network device may use a part of sensing resources in all the configured sensing resources in this case.

In this application, the change of the sensing requirement may also be reflected as a change of a sensing mode, and different sensing modes correspond to different sensing resources. In other words, different sensing modes correspond to different sensing requirements, and different sensing resources may be used for different sensing requirements.

For example, in embodiments of this application, switching between detection mode and tracking mode is used as an example of switching between sensing modes for description. Before the sensing requirement changes, the detection mode is correspondingly used, and after the sensing requirement changes, the tracking mode is correspondingly used. This is not limited in embodiments of this application.

In this application, in the detection mode, all-round sensing is performed on an entire sensing range, and in the tracking mode, specific targets in some specific areas are detected.

It should be understood that the detection mode and the tracking mode in the following are merely examples for describing the service requirement change. In addition, terms of the detection mode and the tracking mode are not limited in embodiments of this application.

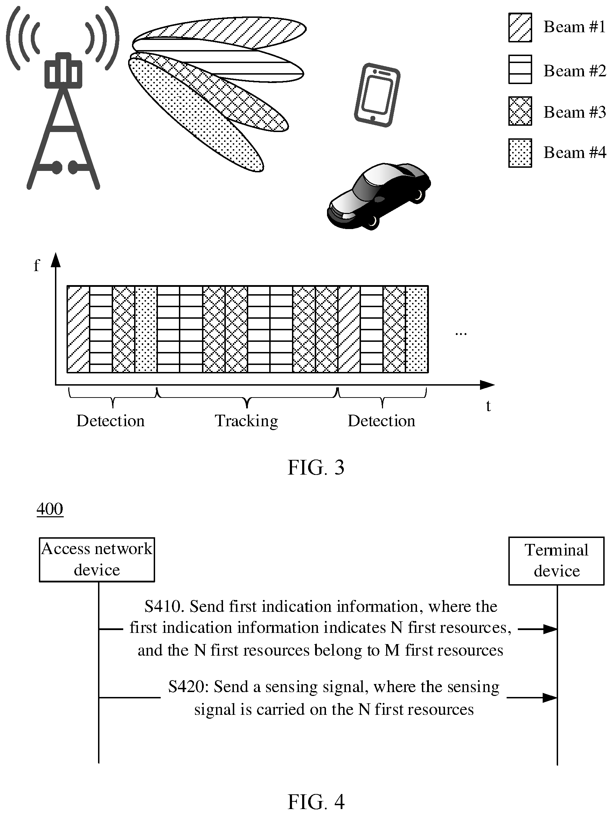

FIG. 3 is a diagram of detection mode and tracking mode. In this scenario, an example in which an access network device performs self-sending and self-receiving is used. In a detection process, the access network device performs sweeping by using four initially configured beams, for example, a beam #1, a beam #2, a beam #3, and a beam #4 shown in FIG. 3, to complete full-range detection on a detection area. Further, after switching to the tracking mode, the access network device selects a part of beams, for example, the beam #2 and the beam #3 shown in FIG. 3. Within time of a tracking process, only the beam #2 and the beam #3 are used for sweeping, to complete sensing enhancement in a part of areas.

The access network device sends a sensing signal based on a sensing resource. During switching between the detection mode and the tracking mode, because requirements of the two processes are different, a beam used by the access network device and a sensing resource associated with the beam may also change. In this case, the sensing resource needs to be dynamically indicated to a UE, so that the UE can select an appropriate receive beam based on a specified sensing resource.

For example, a positioning reference signal (positioning reference signal, PRS) may be used as a sensing signal, the access network device configures a PRS resource set, the PRS resource set is a set of a group of PRS resources of one TRP, and the access network device may send the PRS signal through a beam associated with the PRS resource. The PRS signal supports flexible configuration in time domain and also supports configuration of different bandwidths in frequency domain. In a scenario in which the PRS resource is reused for sensing, the access network device may perform sensing by using the configured PRS resource. Because in different sensing modes, the PRS resource used by the access network device changes, corresponding beam information associated with the PRS resource may also change. In this case, changed PRS resource information needs to be notified to the UE, so that the UE can correspondingly select an optimal receive beam based on the used PRS resource.

In view of this, embodiments of this application provide a communication method. When a sensing service requirement changes, a sensing resource corresponding to the sensing service requirement may be dynamically indicated.

The following describes, in detail with reference to the accompanying drawings, the communication method provided in embodiments of this application. Embodiments provided in this application may be applied to the communication system shown in FIG. 1. This is not limited.

The following describes the solution of this application in detail.

FIG. 4 is a schematic flowchart of a communication method 400 according to an embodiment of this application. For ease of description, an example in which the method 400 is performed through interaction between an access network device and a terminal device is used for description below. It may be understood that the terminal device may be a component (for example, a chip or a circuit) of a terminal device, or the access network device may be a component (for example, a chip or a circuit) of a network device. This is not limited.

In this application, the access network device configures M first resources for a UE. The M first resources may be used for sensing, or may be used for positioning and other functions.

For example, the M first resources may be resources configured by the access network device in an initial state. For example, the access network device may configure M PRS resources by using RRC signaling, where the M PRS resources may be used to implement a positioning function, and may also be used for sensing. The resource may be used to send at least one of: a positioning reference signal, a phase tracking reference signal, a sounding reference signal, a demodulation reference signal, a channel state information reference signal, or the like. This is not limited in this embodiment of this application.

In detection mode, the access network device sends a sensing signal based on beams corresponding to indexes of reference signals associated with the M first resources. After the access network device switches to tracking mode, the access network device may configure a part or all of the M first resources for the UE. A specific manner includes the following steps.

S410: The access network device sends first indication information.

The first indication information indicates N first resources, where the N first resources belong to the M first resources.

In a possible implementation, before sending the first indication information, the access network device sends second indication information to the UE to indicate the M first resources. The M first resources may be used for other functions such as positioning, in addition to sensing. This is not limited in this application.

Correspondingly, the UE receives the second indication information and determines the M first resources based on the second indication information. The indexes of the reference signals associated with the M first resources correspond to different beams, and the UE receives the sensing signal based on the M first resources.

In this application, the M first resources may be understood as sensing resources corresponding to a first sensing service requirement, and the N first resources may be understood as sensing resources corresponding to a second sensing service requirement. In other words, when a sensing service requirement switches from the first sensing service requirement to the second sensing service requirement, sensing resources used by the access network device need to switch from the M first resources to the N first resources.

In an optional understanding, the M first resources may be understood as sensing resources used for a first area, and the N first resources may be understood as sensing resources used for a second area, which belongs to the first area.

In an optional understanding, the M first resources are used for the detection mode, and the N first resources are used for the tracking mode.

In this application, the M first resources may be indicated by using M indexes. These M indexes may start from 0, 1, or 2. This is not limited in this embodiment of this application.

For example, in this embodiment, indexes of the M first resources are {0, 1, 2, ..., M-2, M-1}.

In this application, the N first resources belong to the M first resources. The following uses an example to describe a relationship between the N first resources and the M first resources.

In a possible implementation, the N first resources are any N first resources among the M first resources.

In this implementation, in one manner, the first indication information includes indexes of any N first resources among the M first resources.

In this implementation, in one manner, the first indication information includes M bits, where the M bits correspond to the M first resources. Each bit may indicate two states: a first resource corresponding to the bit belongs to the N first resources, or a first resource corresponding to the bit does not belong to the N first resources.

The following provides, by using Table 1, a state of the first resource indicated by an i^{th} bit among the M bits.

**Table 1**

| Value of the i^{th} bit | Meaning |
|---|---|
| 0 | The i^{th} resource belongs to one of the N resources |
| 1 | The i^{th} resource does not belong to one of the N resources |

The value of the i^{th} bit among the M bits may be 0 or 1. When a state of the i^{th} bit is 0, a first resource with index i does not belong to the N first resources. When a state of the i^{th} bit is 1, a first resource with index i belongs to the N first resources. The reverse is also feasible.

Based on Table 1, a specific example is provided.

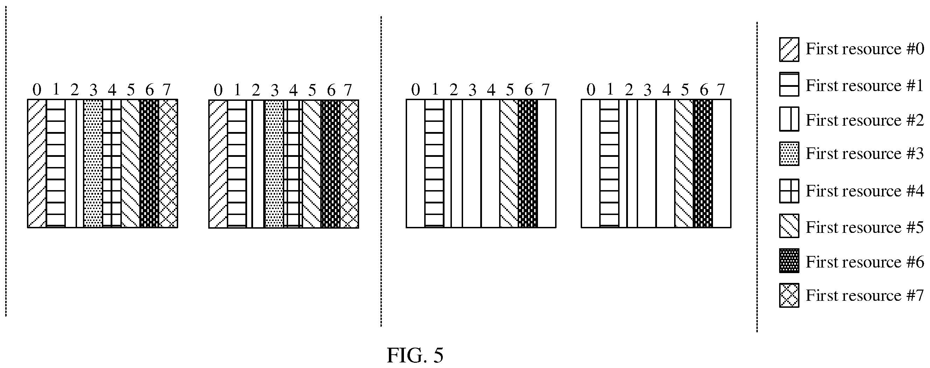

FIG. 5 is a diagram of a resource indication manner. When M is equal to 8, a first field includes 8 bits. If the 8 bits indicates the state 01100110, it indicates that among the eight first resources, first resources with indexes 1, 2, 5, and 6 are used for the tracking mode, and first resources with indexes 0, 3, 4, and 7 are not used for the tracking mode or do not belong to the N first resources. As shown in FIG. 5, among the eight first resources, the first resources with indexes 1, 2, 5, and 6 are used for the tracking mode; that is, the first field indicates 4 first resources with indexes 1, 2, 5, and 6.

Table 1 and FIG. 5 are merely examples for description, and do not constitute any limitation on this embodiment of this application.

In a possible implementation, the N first resources are N first resources with indexes 0 to N-1 among the M first resources.

In an optional understanding, the N first resources are the first N consecutive first resources among the M first resources. In other words, the N first resources are N consecutive resources starting from index 0, that is, first resources with indexes {0, 1, 2, ..., N-2, N-1}, among the M first resources.

In this implementation, the first indication information includes the value of N, where N is a positive integer less than or equal to M.

For example, the first indication information includes a first field, the first field includes X bits, $X = \left⌈{log}_{2} M\right⌉$, and a state of the X bits may indicate the value of N.

The following provides, by using Table 2, an example in which the value of N is indicated by the state of the X bits.

**Table 2**

| Value | Value of N |
|---|---|
| 0000 | 1 |
| 0001 | 2 |
| 0010 | 3 |
| 0011 | 4 |
| ... | ... |
| 0111 | 8 |
| 1000 | 9 |
| 1001 | Reserved |
| ... | ... |
| 1111 | Reserved |

When M is equal to 9, X may be 4 bits, and the 4 bits may indicate the value of N. For example, as shown in Table 2, a state 0000 indicates that the value of N is 1, a state 0001 indicates that the value of N is 2, a state 0010 indicates that the value of N is 3, a state 0011 indicates that the value of N is 4, a state 0100 indicates that the value of N is 5, a state 0101 indicates that the value of N is 6, a state 0110 indicates that the value of N is 7, a state 0111 indicates that the value of N is 8, a state 1000 indicates that the value of N is 9, and states 1001, 1010, 1011, 1100, 1101, 1110, and 1111 indicate a reserved state.

Based on Table 2, a specific example is provided.

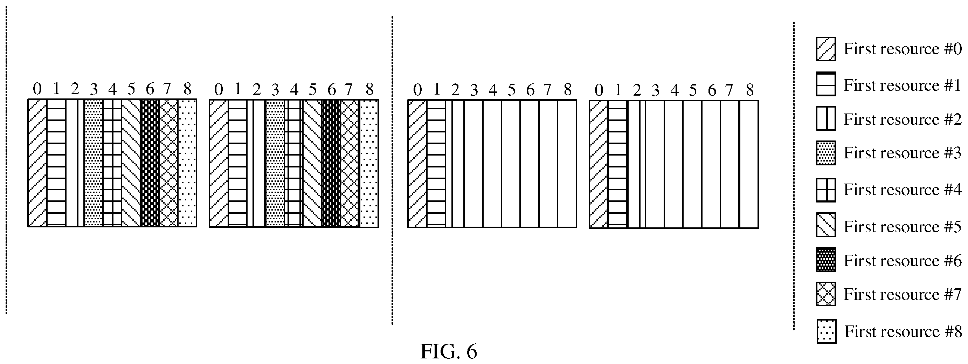

FIG. 6 is a diagram of a resource indication manner. When M is equal to 9, a first field indicated by the first indication information includes 4 bits, and a state of the 4 bits is 0010. In this case, it may be determined that the value of N is 3, that is, the first three first resources among the M first resources are used for the tracking mode. In other words, first resources whose indexes are 0 to 2 are used for the tracking mode.

Table 2 and FIG. 6 are merely examples for description, and do not constitute any limitation on this embodiment of this application.

In a possible implementation, the N first resources are N first resources with indexes M-N to M-1 among the M first resources.

In an optional understanding, the N first resources are the last N consecutive first resources among the M first resources. In other words, the N first resources are N consecutive resources whose indexes start from M-N among the M first resources, that is, first resources whose indexes are {M-N, M-N+1, ..., M-2, M-1}.

In this implementation, the first indication information includes the value of N, and N is a positive integer less than or equal to M.

For example, the first indication information includes a first field.

The following provides, by using Table 1, a state of the first resource indicated by an i^{th} bit among the M bits. $X = \left⌈{log}_{2} M\right⌉$, and a state of the X bits may indicate the value of N.

The following provides, by using Table 3, an example in which the value of N is indicated by the state of the X bits.

**Table 3**

| Value | Value of N |
|---|---|
| 0000 | 1 |
| 0001 | 2 |
| 0010 | 3 |
| 0011 | 4 |
| ... | ... |
| 0111 | 8 |
| 1000 | 9 |
| 1001 | Reserved |
| ... | ... |
| 1111 | Reserved |

When M is equal to 9, X may be 4 bits, and the 4 bits may indicate the value of N. For example, as shown in Table 2, a state 0000 indicates that the value of N is 1, a state 0001 indicates that the value of N is 2, a state 0010 indicates that the value of N is 3, a state 0011 indicates that the value of N is 4, a state 0100 indicates that the value of N is 5, a state 0101 indicates that the value of N is 6, a state 0110 indicates that the value of N is 7, a state 0111 indicates that the value of N is 8, a state 1000 indicates that the value of N is 9, and states 1001, 1010, 1011, 1100, 1101, 1110, and 1111 indicate a reserved state.

Based on Table 3, a specific example is provided.

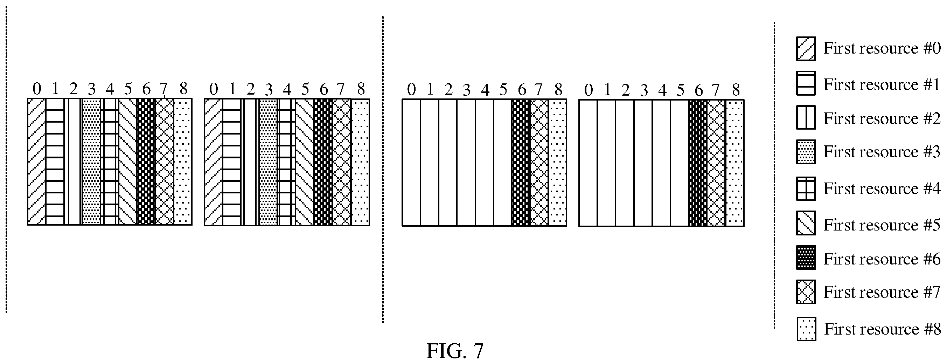

FIG. 7 is a diagram of a resource indication manner. When M is equal to 9, a first field indicated by the first indication information includes 4 bits, and a state of the 4 bits is 0010. In this case, it may be determined that the value of N is 3, that is, the last three first resources among the M first resources are used for the tracking mode. In other words, first resources whose indexes are 6 to 8 are used for the tracking mode.

Table 3 and FIG. 7 are merely examples for description, and do not constitute any limitation on this embodiment of this application.

In a possible implementation, the N first resources are N first resources with indexes 0 to m-1 and M-(N-m) to M-1 among the M first resources, where m is a positive integer, m is greater than 0, and m is less than N.

In an optional understanding, the N first resources include two parts. One part is the first m first resources among the M first resources, and the other part is the last N-m first resources among the M first resources. In other words, the N first resources include resources distributed in a first part of the M first resources and resources distributed in a last part of the M first resources, that is, first resources whose indexes are {0, 1, ..., m-2, m-1, M-(N-m), M-(N-m)+1, ..., M-2, M-1}.

In this implementation, the first indication information includes at least two of: a value of N, a value of m, or a value of N-m.

For example, the first indication information includes a first field and a second field. The first field and the second field respectively indicate two values in the value of N, the value of m, or the value of N-m, where m is a positive integer greater than 0 and less than N.

The first field or the second field includes X bits, $X = \left⌈{log}_{2} M\right⌉$, and a state of the X bits may indicate any one of the value of N, the value of m, or the value of N-m.

The following provides, by using Table 4, an example in which the value of N, the value of m, or the value of N-m is indicated by the state of the X bits.

**Table 4**

| Value | Value of N/m/N-m |
|---|---|
| 000 | 1 |
| 001 | 2 |
| 010 | 3 |
| 011 | 4 |
| ... | ... |
| 111 | 8 |

When M is equal to 8, the first field or the second field may include 3 bits, and the 3 bits may indicate any one of the value of N, the value of m, or the value of N-m. For example, as shown in Table 4, a state 000 indicates that the value of N, the value of m, or the value of N-m is 1, a state 001 indicates that the value of N, the value of m, or the value of N-m is 2, a state 010 indicates that the value of N, the value of m, or the value of N-m is 3, a state 011 indicates that the value of N, the value of m, or the value of N-m is 4, and a state 111 indicates that the value of N, the value of m, or the value of N-m is 8.

It should be noted that the value of m or the value of N-m indicated by the first field or the second field is less than or equal to the value of N indicated by the first field or the second field.

Based on Table 4, a specific example is provided.

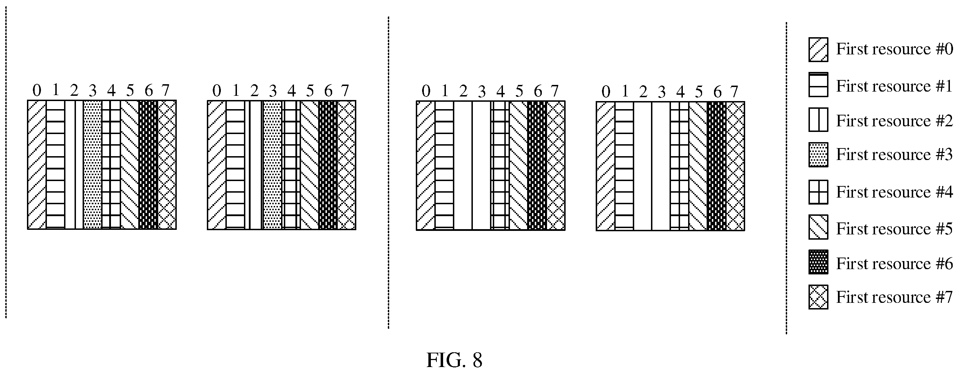

FIG. 8 is a diagram of a resource indication manner. When M is equal to 8, 3 bits included in a first field indicated by the first indication information indicates the value of N, 3 bits included in a second field indicated by the first indication information indicates the value of m, a state of the first field is 101, and a state of the second field is 001. In this case, the value of N is 6, and the value of m is 2, that is, the first two first resources and the last four first resources among the M first resources are used for the tracking mode. In other words, first resources whose indexes are 0 and 1 and first resources whose indexes are 4 to 7 are used for the tracking mode.

Table 4 and FIG. 8 are merely examples for description, and do not constitute any limitation on this embodiment of this application.

In a possible implementation, the N first resources are N first resources with consecutive indexes among the M first resources.

In an optional understanding, the N first resources are N consecutive first resources among the M first resources. In other words, the N first resources are N consecutive resources starting from any index among the M first resources.

In this implementation, the first indication information includes at least two of: a minimum index of a first resource among the N first resources, a maximum index of a first resource among the N first resources, or a value of N, where N is a positive integer less than or equal to M.

For example, the first indication information includes a first field and a second field, the first field or the second field includes X bits, $X = \left⌈{log}_{2} M\right⌉$, and a state of the X bits may indicate the minimum index of the first resource, the maximum index of the first resource, or the value of N.

The following provides, by using Table 5, an example in which the minimum index of the first resource or the maximum index of the first resource is indicated by the state of the X bits.

**Table 5**

| Value | Minimum index of the N resources/Maximum index of the N resources |
|---|---|
| 000 | 0 |
| 001 | 1 |
| 010 | 2 |
| 011 | 3 |
| ... | ... |
| 111 | 7 |

When M is equal to 8, the first field or the second field may include 3 bits, and the 3 bits may indicate the minimum index of the first resource or the maximum index of the first resource among the N first resources. For example, as shown in Table 5, a state 000 indicates that the minimum index of the first resource or the maximum index of the first resource among the N first resources is 0, a state 001 indicates that the minimum index of the first resource or the maximum index of the first resource among the N first resources is 1, a state 010 indicates that the minimum index of the first resource or the maximum index of the first resource among the N first resources is 2, a state 011 indicates that the minimum index of the first resource or the maximum index of the first resource among the N first resources is 3, and a state 111 indicates that the minimum index of the first resource or the maximum index of the first resource among the N first resources is 7.

The following provides, by using Table 6, an example in which the value of N is indicated by the state of the X bits.

**Table 6**

| Value | Value of N |
|---|---|
| 000 | 1 |
| 001 | 2 |
| 010 | 3 |
| 011 | 4 |
| ... | ... |
| 111 | 8 |

When M is equal to 8, the first field or the second field may include 3 bits, and the 3 bits may indicate the value of N. For example, as shown in Table 6, a state 000 indicates that the value of N is 1, a state 001 indicates that the value of N is 2, a state 010 indicates that the value of N is 3, a state 011 indicates that the value of N is 4, a state 100 indicates that the value of N is 5, a state 101 indicates that the value of N is 6, a state 110 indicates that the value of N is 7, and a state 111 indicates that the value of N is 8.

It should be further noted that the maximum index of the first resource indicated by the first indication information cannot be less than the minimum index, and the indicated maximum index and the indicated minimum index of the first resource may be equal. In this case, N is equal to 1.

Based on Table 5, a specific example is provided.

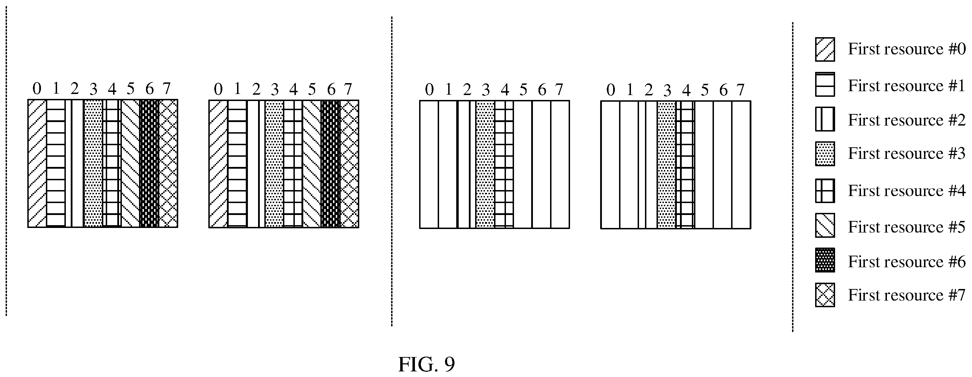

FIG. 9 is a diagram of a resource indication manner. When M is equal to 8, 3 bits included in a first field indicated by the first indication information indicates the minimum index of the first resource, 3 bits included in a second field indicated by the first indication information indicates the maximum index of the first resource, a state of the first field is 001, and a state of the second field is 101. In this case, the minimum index of the first resource is 1, the maximum index of the first resource is 4, and N is equal to 3, that is, three first resources among the M first resources are used for the tracking mode. In other words, first resources whose indexes are 2 to 4 are used for the tracking mode.

Table 5, Table 6, and FIG. 9 are merely examples for description, and do not constitute any limitation on this embodiment of this application.

In this solution, the indicated N sensing resources are N consecutive resources, and indication overheads are low, which facilitates reservation of consecutive resources.

It should be understood that N consecutive sensing resources are indicated, and indexes of resources are determined based on a sequence of time domain resource positions of a specific resource indication. In addition, indexes of beams are consecutively numbered in ascending order of sweeping angles or in descending order of sweeping angles. If the indexes of the resources and the indexes of the beams are arranged in disorder, indication may be performed by using a bitmap. A manner of indication by using the bitmap is more flexible, and is applicable to more scenarios.

In a possible implementation, the N first resources include first resources in L first resource groups, the first resources in the L first resource groups belong to the M first resources, and indexes of first resources in each of the L first resource groups are consecutive.

In an optional understanding, in the tracking mode, a plurality of targets may be tracked. Assuming that L targets need to be tracked, for each tracking target, one or more consecutive resources may be configured among the M first resources to form one resource group, that is, L first resource groups respectively correspond to the L targets, and first resources in the L first resource groups form N first resources. In other words, the N first resources are a plurality of groups of first resources among the M first resources, each group of first resources may include one first resource, or may include a plurality of consecutive first resources, and each group of first resources is used to sense one target.

In this implementation, the first indication information indicates a value of L and at least two of: a minimum index of a first resource in each first resource group, a maximum index of a first resource in each first resource group, or a value of a quantity of first resources in the first resource group.

For example, the first indication information includes a first field and a second field, and a quantity of bits included in the first field or the second field may be determined based on the L first resource groups and a value of M that need to be indicated. The first field or the second field may include L same fields, each field indicates one of a minimum index of a first resource in a corresponding first resource group, a maximum index of a first resource in a corresponding first resource group, or a value of N, and the L fields separately indicate a minimum index of a first resource in L resources, a maximum index of a first resource in L resources, or a value of N.

The following provides, by using Table 7 and Table 8, an example in which the minimum index of the first resource and the maximum index of the first resource in the corresponding resource group are indicated by fields respectively.

**Table 7**

| Value | Meaning |
|---|---|
| 000010 | A minimum index in a 1^{st} resource group is 0, and a minimum index in a 2^{nd} resource group is 2 |
| 001011 | A minimum index in a 1^{st} resource group is 1, and a minimum index in a 2^{nd} resource group is 3 |
| 010100 | A minimum index in a 1^{st} resource group is 2, and a minimum index in a 2^{nd} resource group is 4 |
| 011110 | A minimum index in a 1^{st} resource group is 3, and a minimum index in a 2^{nd} resource group is 6 |
| ... | ... |

**Table 8**

| Value | Meaning |
|---|---|
| 010100 | A maximum index in a 1^{st} resource group is 2, and a maximum index in a 2^{nd} resource group is 4 |
| 011101 | A maximum index in a 1^{st} resource group is 3, and a maximum index in a 2^{nd} resource group is 5 |
| 100110 | A maximum index in a 1^{st} resource group is 4, and a maximum index in a 2^{nd} resource group is 6 |
| 100111 | A maximum index in a 1^{st} resource group is 4, and a maximum index in a 2^{nd} resource group is 7 |
| ... | ... |

When M is equal to 8, assuming that two first resource groups need to be indicated, each field includes 6 bits ( $\left⌈{log}_{2} M\right⌉ ∗ 2$) , and a related indication of an s^{th} first resource group occupies $\left⌈{log}_{2} M\right⌉ ∗ \left(s-1\right) + 1$ to $\left⌈{log}_{2} M\right⌉ ∗ s$ bits. That is, the first 3 bits indicate a 1^{st} resource group, and the last 3 bits indicate a 2^{nd} resource group. For example, as shown in Table 10, a state of the first field indicates a minimum index in the two resource groups. Specifically, a state 000010 indicates that the minimum index of the first resource in the 1^{st} resource group is 0, and the minimum index of the first resource in the 2^{nd} resource group is 2; a state 001011 indicates that the minimum index of the first resource in the 1^{st} resource group is 1, and the minimum index of the first resource in the 2^{nd} resource group is 3; a state 010100 indicates that the minimum index of the first resource in the 1^{st} resource group is 2, and the minimum index of the first resource in the 2^{nd} resource group is 4; and a state 011110 indicates that the minimum index of the first resource in the 1^{st} resource group is 3, and the minimum index of the first resource in the 2^{nd} resource group is 6. For another example, as shown in Table 11, a state of the second field indicates a minimum index in the two resource groups. Specifically, a state 010100 indicates that the maximum index of the first resource in the 1^{st} resource group is 2, and the maximum index of the first resource in the 2^{nd} resource group is 4; a state 011101 indicates that the maximum index of the first resource in the 1^{st} resource group is 3, and the maximum index of the first resource in the 2^{nd} resource group is 5; a state 100110 indicates that the maximum index of the first resource in the 1^{st} resource group is 4, and the maximum index of the first resource in the 2^{nd} resource group is 6; and a state 100111 indicates that the maximum index of the first resource in the 1^{st} resource group is 4, and the maximum index of the first resource in the 2^{nd} resource group is 7.

It should be noted that the minimum index of the first resource in the resource group indicated by the first field needs to be less than or equal to the maximum index of the first resource in the resource group indicated by the second field.

Based on Table 7 and Table 8, a specific example is provided.

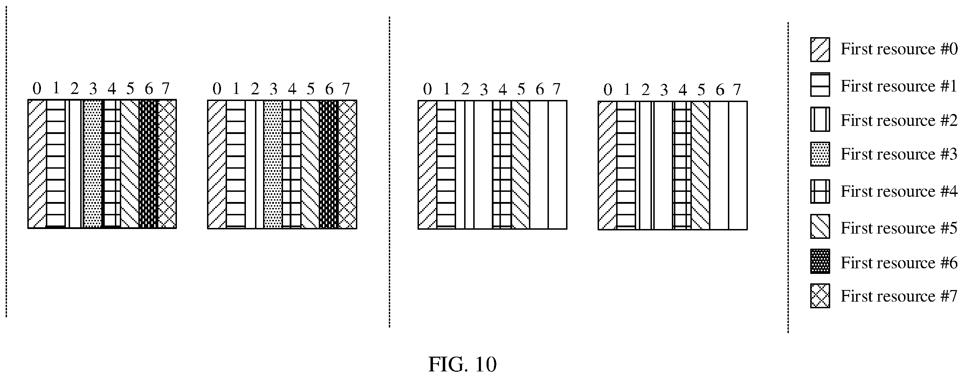

FIG. 10 is a diagram of a resource indication manner. When M is equal to 8 and L is equal to 2, 6 bits included in a first field indicated by the first indication information indicates the minimum index of the first resource in the 1^{st} resource group and the minimum index of the first resource in the 2^{nd} resource group, and 6 bits included in a second field indicated by the first indication information indicates the maximum index of the first resource in the 2^{nd} resource group and the maximum index of the first resource in the 2^{nd} resource group. If a state of the first field is 000100, the minimum index of the first resource in the 1^{st} resource group is 0, and the minimum index of the first resource in the 2^{nd} resource group is 4. If a state of the second field is 010101, the maximum index of the first resource in the 1^{st} resource group is 2, and the minimum index of the first resource in the 2^{nd} resource group is 5. That is, indexes of first resources included in the 1^{st} resource group are {0, 1, 2}, and indexes of first resources included in the 2^{nd} resource group are {4, 5}. In other words, first resources whose indexes are 0 to 2 and first resources whose indexes are 4 and 5 are used to track two sensed targets respectively.

In a possible implementation, the first indication information includes a first field, the first field includes M bits, the M bits correspond to the M first resources, and each bit may indicate two states: a first resource corresponding to the bit belongs to the N first resources, or a first resource corresponding to the bit does not belong to the N first resources. An indication manner is consistent with the meaning in Table 1. For example, when an indicated state is 11101100, assuming that a state 1 indicates that an indicated resource belongs to the N selected resources, a resource usage status is consistent with that in FIG. 10.

In a possible implementation, resources in the L first resource groups form the N first resources, the first indication information may include L fields, and each field indicates a first resource included in a corresponding resource group.

For example, the first indication information includes L fields, and each field includes an index of a first resource in a corresponding resource group.

Table 7, Table 8, and FIG. 10 are merely examples for description, and do not constitute any limitation on this embodiment of this application.

In a possible implementation, the first indication information indicates indexes of the N first resources.

In this implementation, the first indication information indicates the indexes of the N first resources among the M first resources.

For example, the first indication information includes a first field, the first field includes N same fields, and each field indicates indexes of the N resources. In this case, the field includes $N ∗ \left⌈{log}_{2} M\right⌉$ bits in total.

The following provides, by using Table 9, an example in which $N ∗ \left⌈{log}_{2} M\right⌉$ bits indicate the N first resources.

**Table 9**

| Value | Meaning |
|---|---|
| 000010 | An index of a 1^{st} resource is 0, and an index of a 2^{nd} resource is 2 |
| 001011 | An index of a 1^{st} resource is 1, and an index of a 2^{nd} resource is 3 |
| 010100 | An index of a 1^{st} resource is 2, and an index of a 2^{nd} resource is 4 |
| 011110 | An index of a 1^{st} resource is 3, and an index of a 2^{nd} resource is 6 |
| ... | ... |

When M=8 and N=2, the field has 6 bits in total, and the first 3 bits and the last 3 bits indicate indexes of two first resources respectively. As shown in Table 9, when a state of the 6 bits is 000010, the index of the 1^{st} resource is 0, and the index of the 2^{nd} resource is 2; when a state of the 6 bits is 001011, the index of the 1^{st} resource is 1, and the index of the 2^{nd} resource is 3; when a state of the 6 bits is 010100, the index of the 1^{st} resource is 2, and the index of the 2^{nd} resource is 4; or when a state of the 6 bits is 011110, the index of the 1^{st} resource is 3, and the index of the 2^{nd} resource is 6.

Based on Table 9, a specific example is provided.

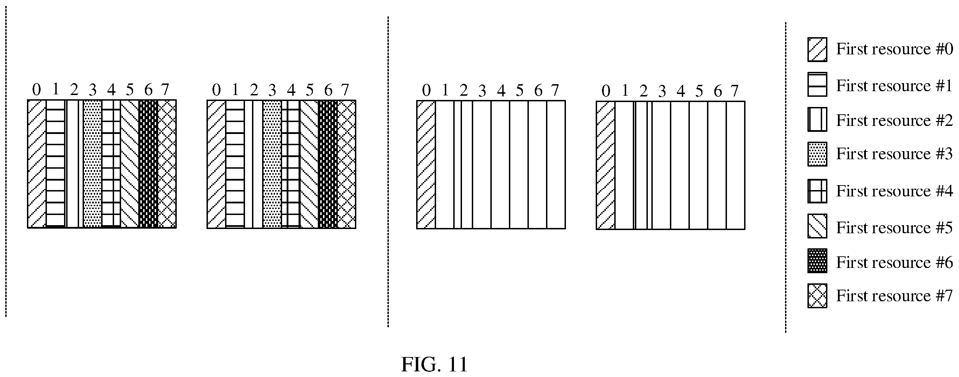

FIG. 11 is a diagram of a resource indication manner. When M=8 and N=2, a first field includes 6 bits. If a state indicated by the 6 bits is 001011, it indicates that first resources whose indexes are 0 and 2 in eight first resources are used for the tracking mode. As shown in FIG. 11, the first resources whose indexes are 0 and 2 in the eight first resources are used for the tracking mode. In other words, the first field indicates two first resources whose indexes are 0 and 2.

Table 9 and FIG. 11 are merely examples for description, and do not constitute any limitation on this embodiment of this application.

The foregoing manner of indicating the N first resources is merely an example for description. This is not limited in this embodiment of this application.

Based on the foregoing technical solution, when a service requirement of a sensing service changes, the access network device may dynamically indicate a corresponding sensing resource to the UE, so that the UE can select, based on a current service requirement, an appropriate resource to receive a sensing signal. In addition, the sensing resource may be indicated in different manners, to implement flexible indication and low indication overheads.

In this application, an association relationship between a sensing resource and a beam may change. To be specific, in a tracking phase, indexes of reference signals associated with the N first resources may change, and a same resource is used for sending through different beams (different from an initially associated beam). Therefore, the UE needs to be further notified of indexes of reference signals associated with the N selected resources.

It should be understood that an index of a reference signal associated with each first resource corresponds to one beam, and the access network device sends a sensing signal based on the beam corresponding to the index of the reference signal associated with the first resource. When the beam associated with the first resource changes, the index of the reference signal associated with the first resource also changes. Therefore, an index of a reference signal associated with at least one of the N first resources needs to be sent to the UE, and the UE may receive the sensing signal on a corresponding beam.

In a possible implementation, the access network device sends third indication information to the UE, where the third indication information indicates an index of a reference signal associated with at least one of the N first resources.

For example, the third indication information includes a first field, the field includes $N ∗ \left⌈{log}_{2} Q\right⌉$ bits, and Q is an optional reference signal index.

For example, when M=8 and N=2, to be specific, two first resources are selected from eight first resources for sending in a tracking phase, and an optional reference signal index sequence length is 64, that is, Q=64. In this case, the field includes 12 bits, the first 6 bits indicate an index of a reference signal associated with a 1^{st} resource in the two first resources, and the last 6 bits indicate an index of a reference signal associated with a 2^{nd} first resource in the two resources.

Based on the foregoing technical solution, when an association relationship between a sensing-related resource and a beam changes, the terminal device determines, based on an index that is indicated by the access network device and that is of a reference signal associated with the sensing resource, a beam associated with the sensing resource, so that the UE can select, based on a current service requirement, an appropriate sensing resource to receive a sensing signal, to implement flexible indication and low indication overheads.

S420: The access network device sends the sensing signal.

The sensing signal is carried on the N first resources.

The UE receives the first indication information, where the first indication information indicates the N first resources.

The UE may determine the N first resources based on the first indication information, and receive a first signal based on the N first resources, where the first signal is the sensing signal sent by the network device.

In this application, the UE may determine the indexes of the N first resources based on the first indication information; or determine the value of N based on the first indication information; or determine at least two of: the value of N, the value of m, or the value of N-m based on the first indication information; or determine at least two of: the minimum index of the first resource among the N first resources, the maximum index of the first resource among the N first resources, or the value of N based on the first indication information, or determine the value of L and at least two of: the minimum index of the first resource in each first resource group, the maximum index of the first resource in each first resource group, or the value of the quantity of first resources in the first resource group based on the first indication information.

A specific determining manner may be based on the table example in step S410, and details are not described again.

In this application, the first indication information may be carried in downlink control information (downlink control information, DCI) signaling or a medium access control (medium access control, MAC) control element, and is sent by the access network device to the UE.

In this application, when a PRS signal is reused for sensing, after the access network device configures a resource by using RRC signaling, the access network device sends the PRS signal, and enters the detection mode in this case; and after switching to the tracking mode, the access network device sends indication information to indicate a PRS resource used by the UE, and in this case, the access network device continues to send the PRS signal for sensing.

The foregoing indication information is also applicable to a scenario in which an SRS signal is reused for sensing. After the access network device configures a resource by using RRC signaling, the UE sends the SRS signal, and the detection mode is entered in this case. After switching to the tracking mode, the access network device sends indication information to indicate an SRS resource used by the UE, and in this case, the UE continues to send the SRS signal for sensing. For a specific implementation, refer to step S410. Details are not described again.

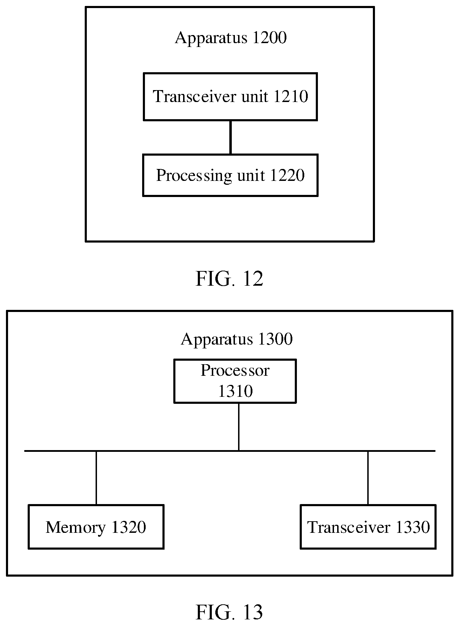

The foregoing describes in detail the methods provided in embodiments of this application with reference to FIG. 4 to FIG. 11. The following describes in detail apparatuses provided in embodiments of this application with reference to FIG. 12 and FIG. 13. It should be understood that descriptions of apparatus embodiments correspond to the descriptions of the method embodiments. Therefore, for content that is not described in detail, refer to the method embodiments. For brevity, details are not described herein again.

The apparatus is configured to implement the foregoing embodiments and related implementations, and details that have been described are not described again. As used below, the term "module" may be a combination of software and/or hardware for implementing a predetermined function. Although the apparatus described in the following embodiment is better implemented by software, implementation by hardware or a combination of software and hardware may also be conceived.

FIG. 12 is a diagram of a structure of a communication apparatus according to an embodiment of this application.

The apparatus 1200 includes a transceiver unit 1210 and a processing unit 1220. The transceiver unit 1210 may be configured to implement a corresponding communication function. The processing unit 1220 may be configured to perform data processing.

Optionally, the transceiver unit 1210 may also be referred to as a communication interface or a communication unit, and includes a sending unit and/or a receiving unit. The transceiver unit 1210 may be a transceiver (including a transmitter and/or a receiver), an input/output interface (including an input interface and/or an output interface), a pin, a circuit, or the like. The transceiver unit 1210 may be configured to perform a sending step and/or a receiving step in the foregoing method embodiments.

Optionally, the processing unit 1220 may be a processor (may include one or more processors), a processing circuit having a processor function, or the like, and may be configured to perform a step other than sending and receiving in the foregoing method embodiments.

Optionally, the apparatus 1200 further includes a storage unit. The storage unit may be a memory, an internal storage unit (for example, a register or a cache), an external storage unit (for example, a read-only memory or a random access memory), or the like. The storage unit is configured to store instructions. The processing unit 1220 executes the instructions stored in the storage unit, to enable the communication apparatus to perform the foregoing method.

In a design, the apparatus 1200 may be configured to perform an action performed by the access network device in the foregoing method embodiments. For example, the apparatus 1200 may be configured to perform an action performed by the terminal device in the foregoing method 400. In this case, the apparatus 1200 may be a component of the access network device. The transceiver unit 1210 is configured to perform receiving and sending-related operations on an access network device side in the foregoing method embodiments. The processing unit 1220 is configured to perform a processing-related operation of the access network device in the foregoing method embodiments.

For example, the transceiver unit 1210 is configured to send first indication information, where the first indication information indicates N first resources, and the N first resources belong to M first resources. The transceiver unit 1210 is further configured to send a sensing signal, where the sensing signal is carried on the N first resources, N and M are positive integers, and N is less than or equal to M.

It should be understood that the transceiver unit 1210 may further perform other operations performed by the access network device in any method in the foregoing method 400. Details are not described herein again.

In a design, the apparatus 1200 may be configured to perform an action performed by the terminal device in the foregoing method embodiments. For example, the apparatus 1200 may be configured to perform an action performed by the terminal device in the foregoing method 400. In this case, the apparatus 1200 may be a component of the terminal device. The transceiver unit 1210 is configured to perform receiving and sending-related operations on a terminal device side in the foregoing method embodiments. The processing unit 1220 is configured to perform a processing-related operation of the terminal device in the foregoing method embodiments.

For example, the transceiver unit 1210 is configured to receive second indication information, where the second indication information indicates M first resources. The transceiver unit 1210 is further configured to receive first indication information, where the first indication information indicates N first resources, and the N first resources belong to the M first resources. The processing unit 1220 is configured to receive a first signal based on the N first resources, where the first signal is a sensing signal sent by a network device, N and M are positive integers, and N is less than or equal to M.

It should be understood that the transceiver unit 1210 and the processing unit 1220 may further perform other operations performed by the terminal device in any method in the foregoing method 400. Details are not described herein again.

It should be further understood that the apparatus 1200 herein is embodied in a form of functional unit. The term "unit" herein may be an application-specific integrated circuit (application-specific integrated circuit, ASIC), an electronic circuit, a processor (for example, a shared processor, a dedicated processor, or a group processor) configured to execute one or more software or firmware programs, a memory, a merged logic circuit, and/or another appropriate component that supports the described function. In an optional example, a person skilled in the art may understand that the apparatus 1200 may be specifically the network device in the foregoing embodiments, and may be configured to perform procedures and/or steps corresponding to the network device in the foregoing method embodiments. To avoid repetition, details are not described herein again.

The apparatus 1200 in the foregoing solutions has a function of implementing a corresponding step performed by the device in the foregoing method, or the apparatus 1200 in the foregoing solutions has a function of implementing a corresponding step performed by the access network device in the foregoing method. The function may be implemented by hardware, or may be implemented by executing corresponding software by hardware. The hardware or software includes one or more modules corresponding to the foregoing function. For example, a transceiver unit may be replaced with a transceiver (for example, a sending unit in the transceiver unit may be replaced with a transmitter, and a receiving unit in the transceiver unit may be replaced with a receiver), and another unit such as a processing unit may be replaced with a processor, to separately perform receiving and sending operations and a related processing operation in the method embodiments.

In addition, the transceiver unit 1210 may alternatively be a transceiver circuit (which, for example, may include a receiving circuit and a sending circuit), and the processing unit may be a processing circuit.

It should be noted that the apparatus in FIG. 12 may be the network element or the device in the foregoing embodiments, or may be a chip or a chip system, for example, a system on chip (system on chip, SoC). The transceiver unit may be an input/output circuit or a communication interface. The processing unit is a processor, a microprocessor, or an integrated circuit integrated on the chip. This is not limited herein.

FIG. 13 is a diagram of a communication architecture according to an embodiment of this application. The communication apparatus 1300 shown in FIG. 13 includes a processor 1310, and optionally, one or more of a memory 1320 or a transceiver 1330. The processor 1310 is coupled to the memory 1320, and is configured to execute instructions stored in the memory 1320, to control the transceiver 1330 to send a signal and/or receive a signal.

It should be understood that the processor 1310 and the memory 1320 may be integrated into one processing apparatus. The processor 1310 is configured to execute program code stored in the memory 1320, to implement the foregoing functions. During specific implementation, the memory 1320 may alternatively be integrated into the processor 1310, or may be independent of the processor 1310. It should be understood that the processor 1310 may alternatively correspond to each processing unit in the foregoing communication apparatus, and the transceiver 1330 may correspond to each receiving unit and sending unit in the foregoing communication apparatus.

It should be further understood that the transceiver 1330 may include a receiver (also referred to as a receiver machine) and a transmitter (also referred to as a transmitter machine). The transceiver may further include an antenna. There may be one or more antennas. The transceiver may alternatively be a communication interface or an interface circuit.

Specifically, the communication apparatus 1300 may correspond to the terminal device in the method 400 according to embodiments of this application. The communication apparatus 1300 may perform the step performed by the terminal device in the method 400. The communication apparatus 1300 may correspond to the access network device in the method 400 according to embodiments of this application. The communication apparatus 1300 may perform the step performed by the access network device in the method 400. It should be understood that a specific process of the foregoing corresponding step is described in detail in the foregoing method embodiments. For brevity, details are not described herein.

When the communication apparatus 1300 is a chip, the chip includes an interface unit and a processing unit. The interface unit may be an input/output circuit or a communication interface. The processing unit may be a processor, a microprocessor, or an integrated circuit integrated on the chip.

In an implementation process, steps in the foregoing methods may be implemented by a hardware integrated logic circuit in the processor, or by using instructions in a form of software. The steps of the method disclosed with reference to embodiments of this application may be directly performed by a hardware processor, or may be performed by using a combination of hardware in the processor and a software module. The software module may be located in a mature storage medium in the art, such as a random access memory, a flash memory, a read-only memory, a programmable read-only memory, an electrically erasable programmable memory, or a register. The storage medium is located in the memory, and the processor reads information in the memory and completes the steps in the foregoing methods in combination with hardware of the processor. To avoid repetition, details are not described herein again.

It should be noted that, the processor in embodiments of this application may be an integrated circuit chip, and has a signal processing capability. In an implementation process, steps in the foregoing method embodiments may be implemented by a hardware integrated logic circuit in the processor, or by using instructions in a form of software. The processor may be a general-purpose processor, a digital signal processor (DSP), an application-specific integrated circuit (ASIC), a field programmable gate array (FPGA) or another programmable logic device, a discrete gate or a transistor logic device, or a discrete hardware component. The processor may implement or perform the methods, the steps, and logical block diagrams that are disclosed in embodiments of this application. The general-purpose processor may be a microprocessor, or the processor may be any conventional processor or the like. The steps of the method disclosed with reference to embodiments of this application may be directly performed by a hardware decoding processor, or may be performed by using a combination of hardware in the decoding processor and a software module. The software module may be located in a mature storage medium in the art, such as a random access memory, a flash memory, a read-only memory, a programmable read-only memory, an electrically erasable programmable memory, or a register. The storage medium is located in the memory, and the processor reads information in the memory and completes the steps in the foregoing methods in combination with hardware of the processor.

This application further provides a computer-readable medium storing a computer program. When the computer program is executed by a computer, functions in any one of the foregoing method embodiments are implemented.

This application further provides a computer program product. When the computer program product is executed by a computer, functions in any one of the foregoing method embodiments are implemented.

All or some of the foregoing embodiments may be implemented by using software, hardware, firmware, or any combination thereof. When software is used to implement embodiments, all or some of embodiments may be implemented in a form of a computer program product. The computer program product includes one or more computer instructions. When the computer instructions are loaded and executed on a computer, all or a part of the procedures or functions according to embodiments of this application are generated. The computer may be a general-purpose computer, a dedicated computer, a computer network, or another programmable apparatus. The computer instructions may be stored in a computer-readable storage medium, or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible to the computer, or a data storage device, for example, a server or a data center, integrating one or more usable media. The usable medium may be a magnetic medium (for example, a floppy disk, a hard disk, or a magnetic tape), an optical medium (for example, a high-density digital video disc (digital video disc, DVD)), a semiconductor medium (for example, a solid state disk (solid state disk, SSD)), or the like.

In embodiments of this application, the word "example" or "for example" is used to represent giving an example, an illustration, or a description. Any embodiment or design scheme described as an "example" in this application should not be explained as being more preferred or having more advantages than another embodiment or design scheme. Exactly, the term "example" is for presenting a concept in a specific manner.

It should be understood that, an "embodiment" mentioned throughout this specification means that particular features, structures, or characteristics related to this embodiment are included in at least one embodiment of this application. Therefore, embodiments in the entire specification do not necessarily refer to a same embodiment. In addition, these particular features, structures, or characteristics may be combined in one or more embodiments in any appropriate manner.

It should be understood that sequence numbers of the foregoing processes do not mean execution sequences in various embodiments of this application. The execution sequences of the processes should be determined according to functions and internal logic of the processes, and should not be construed as any limitation on the implementation processes of embodiments of this application. Names of all nodes and messages in this application are merely names set for ease of description in this application, and may be different in an actual network. It should not be understood that names of various nodes and messages are limited in this application. On the contrary, any name that has a function that is the same as or similar to that of the node or the message used in this application is considered as a method or an equivalent replacement in this application, and falls within the protection scope of this application.

It should be further understood that, in this application, "when" and "if" mean that UE or a base station performs corresponding processing in an objective situation, but do not constitute any limitation on time, do not require the UE or the base station to perform a determining action during implementation, and do not mean other limitations either.

In addition, the terms "system" and "network" in this specification may be used interchangeably in this specification. The term "and/or" in this specification describes only an association relationship between associated objects and represents that three relationships may exist. For example, A and/or B may represent the following three cases: Only A exists, both A and B exist, and only B exists.

The term "at least one of..." in this specification represents all or any combination of the listed items. For example, "at least one of A, B, and C" may represent the following six cases: A exists alone, B exists alone, C exists alone, A and B coexist, B and C coexist, and A, B, and C coexist. In this specification, "at least one" means one or more. "A plurality of" means two or more.

It should be understood that, the terms "include", "comprise", "have", and their variants all mean "include but are not limited to", unless otherwise specifically emphasized in another manner.

It should be understood that, in various embodiments of this application, first, second, and various numbers are merely used for distinguishing for ease of description, and are not used to limit the scope of embodiments of this application. For example, different information is distinguished.

A person of ordinary skill in the art may be aware that, in combination with the examples described in embodiments disclosed in this specification, units and algorithm steps can be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process and beneficial effects in the foregoing method embodiments. Details are not described herein again.

In the several embodiments provided in this application, it should be understood that the disclosed system, apparatus, and method may be implemented in other manners. For example, the described apparatus embodiments are merely examples. For example, division into the units is merely logical function division, and may be other division during actual implementation. For example, a plurality of units or components may be combined or may be integrated into another system, or some features may be ignored or not performed. In addition, the displayed or discussed mutual couplings or direct couplings or communication connections may be implemented through some interfaces. The indirect couplings or communication connections between the apparatuses or the units may be implemented in electrical, mechanical, or another form.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit.

When the functions are implemented in a form of a software functional unit and sold or used as an independent product, the functions may be stored in a computer-readable storage medium. Based on such an understanding, the technical solutions of this application essentially, or the part contributing to the conventional technology, or a part of the technical solutions may be implemented in a form of a software product. The computer software product is stored in a storage medium and includes several instructions for instructing a computer device (which may be a personal computer, a server, a network device, or the like) to perform all or some of the steps of the methods described in embodiments of this application. The foregoing storage medium includes any medium that can store program code, such as a USB flash drive, a removable hard disk, a read-only memory (Read-Only Memory, ROM), a random access memory (Random Access Memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, comprising:
sending first indication information, wherein the first indication information indicates N first resources, and the N first resources belong to M first resources; and
sending a sensing signal, wherein the sensing signal is carried on the N first resources, N and M are positive integers, and N is less than or equal to M.

2. The method according to claim 1, wherein that the N first resources belong to the M first resources comprises:
the N first resources are any N first resources among the M first resources;
the N first resources are N first resources with indexes 0 to N-1 among the M first resources;
the N first resources are N first resources with indexes M-N to M-1 among the M first resources;
the N first resources are N first resources with indexes 0 to m-1 and M-(N-m) to M-1 among the M first resources, wherein m is a positive integer, m is greater than 0, and m is less than N;
the N first resources are N first resources with consecutive indexes among the M first resources; or
the N first resources comprise first resources in L first resource groups, the first resources in the L first resource groups belong to the M first resources, and indexes of first resources in each of the L first resource groups are consecutive.

3. The method according to claim 1 or 2, wherein that the first indication information indicates the N first resources comprises:
the first indication information indicates indexes of the N first resources.

4. The method according to claim 1 or 2, wherein that the first indication information indicates the N first resources comprises:
the first indication information comprises indexes of the N first resources;
the first indication information comprises a value of N;
the first indication information comprises at least two of: a value of N, a value of m, or a value of N-m;
the first indication information comprises at least two of: a minimum index of a first resource among the N first resources, a maximum index of a first resource among the N first resources, or a value of N; or
the first indication information comprises a value of L and at least two of: a minimum index of a first resource in each first resource group, a maximum index of a first resource in each first resource group, or a value of a quantity of first resources in the first resource group.

5. The method according to any one of claims 1 to 4, wherein the method further comprises:
sending second indication information, wherein the second indication information indicates the M first resources.

6. The method according to any one of claims 1 to 5, wherein the method further comprises:
sending third indication information, wherein the third indication information indicates an index of a reference signal associated with at least one of the N first resources.

7. The method according to any one of claims 1 to 6, wherein the first indication information is carried in a medium access control control element or downlink control information.

8. The method according to any one of claims 1 to 7, wherein the sensing signal is at least one of: a positioning reference signal, a phase tracking reference signal, a sounding reference signal, a demodulation reference signal, or a channel state information reference signal.

9. A communication method, comprising:
receiving second indication information, wherein the second indication information indicates M first resources;
receiving first indication information, wherein the first indication information indicates N first resources, and the N first resources belong to the M first resources; and
receiving a first signal based on the N first resources, wherein the first signal is a sensing signal sent by a network device, N and M are positive integers, and N is less than or equal to M.

10. The method according to claim 9, wherein that the N first resources belong to the M first resources comprises:
the N first resources are any N first resources among the M first resources;
the N first resources are N first resources with indexes 0 to N-1 among the M first resources;
the N first resources are N first resources with indexes M-N to M-1 among the M first resources;
the N first resources are N first resources with indexes 0 to m-1 and M-(N-m) to M-1 among the M first resources, wherein m is a positive integer, m is greater than 0, and m is less than N;
the N first resources are N first resources with consecutive indexes among the M first resources; or
the N first resources comprise first resources in L first resource groups, the first resources in the L first resource groups belong to the M first resources, and indexes of first resources in each of the L first resource groups are consecutive.

11. The method according to claim 9 or 10, wherein that the first indication information indicates the N first resources comprises:
the first indication information indicates indexes of the N first resources.

12. The method according to claim 9 or 10, wherein that the first indication information indicates the N first resources comprises:
the first indication information comprises indexes of the N first resources;
the first indication information comprises a value of N;
the first indication information comprises at least two of: a value of N, a value of m, or a value of N-m;
the first indication information comprises at least two of: a minimum index of a first resource among the N first resources, a maximum index of a first resource among the N first resources, or a value of N; or
the first indication information comprises a value of L and at least two of: a minimum index of a first resource in each first resource group, a maximum index of a first resource in each first resource group, or a value of a quantity of first resources in the first resource group.

13. The method according to any one of claims 9 to 12, wherein the method further comprises:
receiving third indication information; and
determining, based on the third indication information, an index of a reference signal associated with at least one of the N first resources.

14. The method according to any one of claims 9 to 13, wherein the first indication information is carried in a medium access control control element or downlink control information.

15. The method according to any one of claims 9 to 14, wherein the first signal is at least one of: a positioning reference signal, a phase tracking reference signal, a sounding reference signal, a demodulation reference signal, or a channel state information reference signal.

16. A communication apparatus, comprising a unit configured to perform the method according to any one of claims 1 to 8.

17. A communication apparatus, comprising a unit configured to perform the method according to any one of claims 9 to 15.

18. A communication apparatus, comprising a processor, wherein the processor is configured to execute a computer program or instructions, so that the apparatus performs the method according to any one of claims 1 to 15.

19. A communication system, comprising the communication apparatus according to claim 16 and the communication apparatus according to claim 17.

20. A computer-readable storage medium, wherein the computer-readable storage medium stores a computer program or instructions, and when the computer program or the instructions are run on a computer, the method according to any one of claims 1 to 15 is performed.

21. A chip system, comprising a processor, configured to invoke a computer program from a memory and run the computer program, so that a communication device on which the chip system is installed performs the method according to any one of claims 1 to 15.

22. A computer program product, wherein when the computer program product runs on a computer, the method according to any one of claims 1 to 15 is performed.
